# EUROPÄISCHE PATENTSCHRIFT

(11) **EP 0 377 825 B1**
(45) Veröffentlichungstag und Bekanntmachung des Hinweises auf die Patenterteilung: **02.03.1994**
(21) Anmeldenummer: 89122442.0
(22) Anmeldetag: 05.12.1989
(51) Int. Cl.: G01T 5/08, G01T 1/20

(54) **Strahlungsdetektor**
Radiation detector
Détecteur de rayonnement

(30) Priorität: 07.12.1988 DE 3841136
(43) Veröffentlichungstag der Anmeldung: 18.07.1990
(73) Patentinhaber: HOECHST AKTIENGESELLSCHAFT, 65926 Frankfurt am Main (DE)
(72) Erfinder: Groh, Werner, Dr., D-6302 Lich (DE); Coutandin, Jochen, Dr., D-6536 Langenlonsheim (DE); Herbrechtsmeier, Peter, Dr., D-6240 Königstein/Taunus (DE); Theis, Jürgen, Dr., D-6000 Frankfurt am Main (DE)

(56) Entgegenhaltungen:
- FR-A- 2 552 887
- FR-A- 2 555 321
- 2ND INTERNATIONAL CONFERENCE ON OPTICAL FIBER SENSORS - OFS'84, Stuttgart, 5.-7. September 1984, Seiten 133-141, VDE-Verlag GmbH, Berlin, DE; J.C. THEVENIN et al.: "Scintillating and fluorescent plastic optical fibers for sensors applications"

## Beschreibung

Die Erfindung bezieht sich auf einen Detektor zum Nachweis von Röntgenstrahlung

Bekannt ist, daß bei der seitlichen Einstrahlung von Licht in einen Fluoreszenzfarbstoffe enthaltenden Lichtwellenleiter Fluoreszenzstrahlung erzeugt wird, welche durch Totalreflexion zu den Stirnflächen des Lichtwellenleiters geleitet werden kann (vgl. Tanaka et al., SPIE, Vol, 840 "Fiber Optic Systems for Mobile Platforms", S. 19).

Weiterhin ist bekannt, daß mit einer szintillierenden Verbindung dotierte Polymer-Lichtwellenleiter zum Nachweis von γ-Strahlung und geladenen Teilchen verwendet werden können (vgl. H. Blumenfeld et al., Nucl. Instr. Meth. A257 (1987) 603). Ein Nachteil dieser Methode besteht jedoch darin, daß die empfindliche Fläche auf Geometrien beschränkt ist, die sich aus solchen Fasern herstellen läßt. So ist es z.B. nicht ohne weiteres möglich, die häufig verwendete kreisförmige empfindliche Fläche zu realisieren.

Die FR-A-2 552 887 beschreibt einen Detektor bestehend aus einem szintillierenden Material (ZnS(Ag)-Bor-Matrix) und darin eingebetteten Fasern; wobei die Detektion durch seitliche Einstrahlung des Lichtes in die Faser stattfindet.

Ferner bekannt ist ein Sensor, welcher Fasern enthält, die mit einem szintillierenden Material dotiert sind (2nd, International Conference on Optical Fiber Sensors - OFS' 84, Stuttgart 1984, Seiten 133 - 141).

Hier wird weiter ein Detektorturm beschrieben, bei dem das primär erzeugte Szintillationslicht von Fluoreszenzfarbstoffen in Acrylplatten absorbiert und reemittiert, zu den Plattenstirnseiten geleitet, von mit Fluoreszenzfarbstoff dotierten Fasern absorbiert und wieder reemittiert wird.

Es ist auch schon vorgeschlagen worden, einen Lichtdetektor aus einem plattenförmigen lichtabsorbierenden Körper und mindestens einem damit verbundenen Lichtwellenleiter herzustellen (vgl. DE 38 32 803, veröffentlicht nach dem Anmeldetag der vorliegenden Anmeldung).

Die Aufgabe bestand darin, einen Detektor für Röntgenstrahlung zu finden, der sich durch Einfachheit und flexible Gestaltungsmöglichkeit auszeichnet.

Es wurde gefunden, daß die Aufgabe gelöst werden kann, wenn mindestens ein einen Fluoreszenzfarbstoff enthaltender Lichtwellenleiter in der in Anspruch 1 angegebenen Weise parallel zur Oberfläche einer Strahlung absorbierenden Platte angeordnet wird.

Somit betrifft die Erfindung den in den Ansprüchen beschriebenen Detektor.

Die Strahlung absorbierende Platte kann eine beliebige Form haben, vorzugsweise ist sie rechteckig oder rund, insbesondere rechteckig. die Dicke beträgt 0,1 bis 3 mm, vorzugsweise 0,3 bis 1 mm. Die Platte besteht aus einem mit einer lumineszierenden Verbindung dotierten Trägermaterial, beispielsweise einem Polymeren.
Derartige Platten können beispielsweise die im Handel erhältlichen Röntgenleuchtschirme sein.

Parallel zur Oberfläche der Platte ist mindestens ein Lichtwellenleiter angeordnet, welcher mit der Oberfläche verklebt ist. An die Stelle eines einzigen Lichtwellenleiters kann auch ein Bündel von Lichtwellenleitern treten und der oder die Lichtwellenleiter können auch zwischen zwei Platten angeordnet sein, so daß das Ganze eine Sandwichstruktur besitzt.

Der Lichtwellenleiter kann eine handelsübliche Faser sein, die bevorzugt aus einem transparenten Polymer, beispielsweise Polycarbonat, Polystyrol oder Polymethylmethacrylat im Kern und einem Polymermantel mit niedrigerem Brechungsindex, beispielsweise einem fluorierten Acrylat, besteht.

Der Lichtwellenleiter enthält mindestens einen Fluoreszenzfarbstoff, wobei sich der Wellenlängenbereich der Lumineszenzstrahlung aus der Platte mit dem Wellenlängenbereich der Absorption des Lichtwellenleiterfarbstoffes überlappen muß. Beim Lichtwellenleiter kann sich der Farbstoff sowohl im Kern als auch im Mantel oder in beiden befinden. Geeignete Fluoreszenzfarbstoffe sind insbesondere organische Verbindungen, beispielsweise Perylenfarbstoffe, Benzoxanthene, oder auch anorganische Verbindungen, beispielsweise Zinksulfid.

Trifft eine Strahlung geeigneter Wellenlänge z.B. Röntgenstrahlung, auf die Platte, so wird in der Platte Lumineszenzlicht emittiert, das mit hoher Intensität auf die Lichtleitfaser trifft. Ist der Farbstoff in der Faser so abgestimmt, daß der spektrale Emissionsbereich des Szintillators mit dem spektralen Absorptionsbereich des Lichtleitfaserfarbstoffs übereinstimmt, so erzeugt das Licht aus der Platte Fluoreszenzstrahlung im Lichtwellenleiter, die ihrerseits durch Totalreflexion geführt wird und an den Enden des Lichtwellenleiters austritt. Dort befindet sich ein lichtempfindliches Halbleiterelement, beispielsweise eine Silizium-Diode, die die Strahlung nachweist. Die Diode kann kleinflächig und daher rauscharm sein.

Um eine eventuell störende Bestrahlung des Lichtwellenleiters mit Fremdstrahlung zu vermeiden, kann dieser auf der der Platte abgewandten Seite mit einer absorbierenden Schicht, z.B. einer schwarzen Metallfolie, umgeben sein. Transparente Schichten zum Schutz vor mechanischer oder chemischer Beanspruchung oder zur Kontrolle der Totalreflexion können auf der Platte oder dem Lichtwellenleiter aufgebracht werden. Um das optische Signal über eine größere Entfernung zum Halbleiterelement zu übertragen, können an das Ende des Fluoreszenz-Lichtwellenleiters dämpfungsärmere Lichtwellenleiter aus Polymer oder Glas angebracht werden.

Die Figuren zeigen Beispiele von bevorzugten Ausführungsformen des erfindungsgemäßen Strahlungsdetektors.
Figur 1 zeigt einen Detektor, bei welchem eine Strahlung absorbierende Platte (1) mit einem Bündel parallel angeordneter Lichtwellenleiter (2) durch die Kleberschicht (3) verbunden ist.
Figur 2 zeigt einen Detektor, bei welchem zwei Platten (1) die Lichtwellenleiter (2) umschließen. Die Verbindung erfolgt wiederum durch die Kleberschicht (3).

Vorteile des erfindungsgemäßen Detektors sind:
- Sehr große empfindliche Fläche möglich, die zudem durch entsprechende Maskierung beliebig gestaltet werden kann. Zur Maskierung können z.B. strahlungsundurchlässige Metall- oder Klebefolien verwendet werden.
- Rein optische Funktion, d.h. es sind keine elektrischen Zuführungen am Ort des Strahlungsnachweises erforderlich. Eine Anwendung ist daher auch in Ex-Bereichen möglich.
- Kein oder nur geringer Justieraufwand durch große Detektorfläche.
- Nachweis von auf beide Seiten der Platte einfallender Strahlung möglich.
- Die spektrale Empfindlichkeit des Detektors ist selektiv im Bereich der Absorption des Szintillators in der Platte und kann durch Wahl dieses Szintillators dem Meßproblem angepaßt werden.
- Durch geeignete Wahl des Leuchtschirm-Materials bzw. Szintillators kann die Lumineszenzausbeute für Röntgenguanten in unterschiedlichen Energiebereichen optimiert werden.

### Beispiel

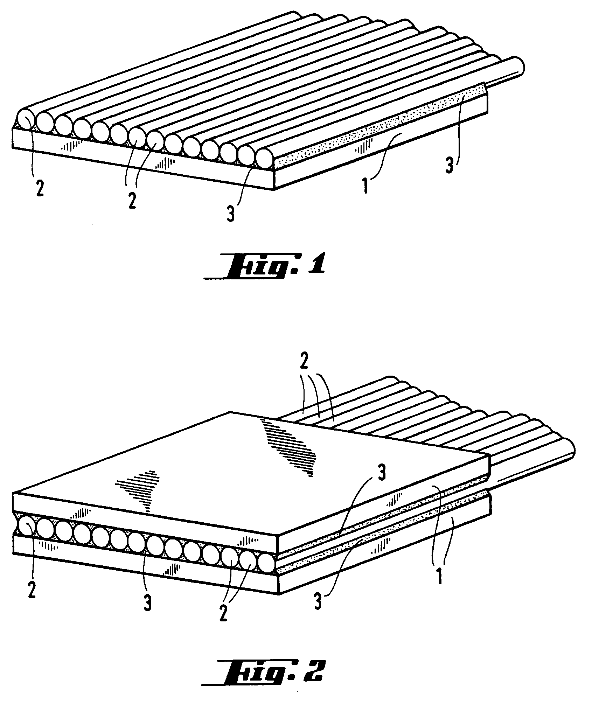

Ein Polymer-Lichtwellenleiter mit Polycarbonat-Kern und Poly(4-methylpenten-1)-Mantel war im Kern mit einem Perylen-Farbstoff dotiert, der im Wellenlängenbereich 520-580 nm absorbiert. Der Faser-Durchmesser betrug 1 mm. 9 Lichtwellenleiter von je 15 cm Länge wurden parallel zu einem Band angeordnet und an einem Faserende von zwei Platten, je 1 cm x 2 cm groß, bedeckt (Figur 2). Die Platten sind als Röntgenleuchtschirme im Handel und bestehen aus einem (Zn, Cd)S:Ag-Pigment, dessen Emissionswellenlänge von 540 nm im Absorptionsbereich des Lichtwellenleiter-Farbstoffs liegt. Platten und Fasern wurden miteinander verklebt und zum Schutz vor äußeren Einflüssen mit einem schwarzen dünnwandigen Schrumpfschlauch umgeben. Die Faserenden am Leuchtschirm waren verspiegelt, um maximale Intensität an der Fotodiode zu erhalten.

Wegen der relativ hohen Dämpfung der Fluoreszenz-Lichtwellenleiter ist es bei längeren Übertragungsstrecken zur Fotodiode empfehlenswert, mittels einer Steckverbindung auf ungefärbte Lichtwellenleiter überzugehen.

Die Tabelle zeigt das Ergebnis einer Testmessung. Der Detektor wurde mit seiner empfindlichen Fläche einem Röntgenstrahl ausgesetzt. Bei Variation des Kathodenstroms an der Röntgenröhre ergab sich eine etwa lineare Abhängigkeit zur Spannung an der Fotodiode.

**Tabelle**

| Kathodenstrom [mA] | Detektorspannung [V] | |
|---|---|---|
| | 30 kV | 40 kV (Röhrenspannung) |
| 5 | 0,22 | 0,53 |
| 10 | 0,48 | 1,14 |
| 15 | 0,75 | 1,74 |
| 20 | 1,01 | 2,36 |
| 25 | 1,28 | 2,96 |
| 30 | 1,55 | 3,58 |

## Patentansprüche

1. Detektor zum Nachweis von Röntgenstrahlung, bestehend aus mindestens einer Strahlung absorbierenden Platte aus einem mit einer lumineszierenden Verbindung dotierten Trägermaterial und mindestens einem damit verbundenen Lichtwellenleiter, der parallel zur Oberfläche mindestens einer Platte angeordnet ist,
dadurch gekennzeichnet, daß der Lichtwellenleiter auf der Oberfläche der Platte angeordnet und mit dieser verklebt ist und daß er einen Fluoreszenzfarbstoff enthält, wobei sich der Wellenlängenbereich der Lumineszenzstrahlung aus der Platte mit dem Wellenlängenbereich der Absorption des Farbstoffes überlappt.

2. Detektor nach Anspruch 1, dadurch gekennzeichnet, daß mehrere Lichtwellenleiter parallel zur Oberfläche mindestens einer Platte angeordnet sind.

3. Detektor nach Anspruch 1, dadurch gekennzeichnet, daß mindestens ein Lichtwellenleiter zwischen zwei parallel zueinander befindlichen Platten angeordnet ist.

4. Detektor nach Anspruch 1, dadurch gekennzeichnet, daß mehrere Lichtwellenleiter zwischen zwei parallel zueinander befindlichen Platten angeordnet sind.

## Claims

1. A detector for detecting x-radiation composed of at least one radiation-absorbing panel made from a carrier material doped with a luminescent compound and at least one optical wave guide joined thereto and arranged parallel to the surface of at least one panel wherein the optical wave guide is arranged on the surface of the panel and is adhesively bonded to it and wherein it contains a fluorescent dyestuff, the wavelength range of the luminescent radiation from the panel over lapping with the wavelenghth range of the absorption of the dystuff.

2. The detector as claimed in claim 1, wherein a plurality of optical wave guides are arranged parallel to the surface of at least one panel.

3. The detector as claimed in claim 1, wherein at least one optical wave guide is arranged between two panels situated parallel to one another.

4. The detector as claimed in claim 1, wherein a plurality of optical wave guides are arranged between two panels situated parallel to one another.

## Revendications

1. Détecteur servant à détecter le rayonnement X, constitué par au moins une plaque absorbant le rayonnement et réalisée en un matériau de support dopé avec une composition luminescente, et par au moins un guide d'ondes lumineuses, qui est raccordé à cette plaque et est disposé parallèlement à la surface d'au moins une plaque, caractérisé en ce que le guide d'ondes lumineuses est disposé sur la surface de la plaque et est collé à cette dernière et qu'il contient un colorant fluorescent, la gamme des longueurs d'onde du rayonnement luminescent délivrée par la plaque étant en chevauchement avec la gamme des longueurs d'onde de l'absorption du colorant.

2. Détecteur selon la revendication 1, caractérisé en ce que plusieurs guides d'ondes lumineuses sont disposées parallèlement à la surface d'au moins une plaque.

3. Détecteur selon la revendication 1, caractérisé en ce qu'au moins un guide d'ondes lumineuses est disposé entre deux plaques parallèles entre elles.

4. Détecteur selon la revendication 1, caractérisé en ce que plusieurs guides d'ondes lumineuses sont disposées entre deux plaques parallèles entre elles.
